# EUROPEAN PATENT APPLICATION

(11) **EP 3 608 068 A1**
(43) Date of publication of application: **12.02.2020**
(21) Application number: 18818924.5
(22) Date of filing: 15.02.2018
(51) Int. Cl.: B25J 19/06

(54) **SAFETY DEVICE**

(30) Priority: 13.06.2017 JP 2017116252
(71) Applicant: Sumitomo Riko Company Limited, Komaki-shi, Aichi 485-8550 (JP)
(72) Inventor: SATO, Susumu, Komaki-shi Aichi 485-8550 (JP); FUJIKAWA, Tomohiro, Komaki-shi Aichi 485-8550 (JP)
(74) Representative: Becker Kurig Straus
(86) International application number: PCT/JP2018/005198
(87) International publication number: WO 2018/230036

(57) **Abstract**

The present invention provides a safety device which has a novel structure and which can ensure safety against collisions between a moving part of an automatic device and an operator or the like, and improve the operation efficiency of the automatic device by preventing erroneous detection. This safety device 10, which prevents danger caused by collisions between a moving part 22 of an automatic device 14 and a detection target A, is provided with a collision detection means 36 for detecting the approach/contact of the moving part 22 and the detection target A; and a moving part control device 54 which accelerates/decelerates or stops the movement of the moving part 22 on the basis of a detection signal from the collision detection means 36. The present invention is also provided with: a dangerous state detection means 56 in which a danger region 70, where the moving part 22 and the detection target A can collide, is set, and which detects whether at least one among the moving part 22 and the detection target A is located in the danger region 70; and a collision detection control device 64 which validates or invalidates, on the basis of the detection signal from the dangerous state detection means 56, the detection, by the collision detection means 36, of the approach/contact of the moving part 22 and the detection target A.

## Description

### Technical Field

The present disclosure relates to a safety device that prevents danger due to a collision between an automatic device such as an industrial robot and a detection object such as an operator.

### Background Art

In the related art, for example, with implementation of industrial automation, automatic devices such as industrial robots or automatic guided vehicles (AGC) are generally used in factories or the like. In such automatic devices, the whole or a part thereof such as an arm of an industrial robot is constituted as a moving part that can move to perform predetermined operations.

With employing more automatic devices such as collaborative robots that work together with human operators in the same space, it is necessary to prevent a collision between a moving part of an automatic device and an operator using a method or member substituting a safety fence and thus to improve safety. For example, when an industrial robot and an operator work together in the same space and an arm or the like of the industrial robot moves, it is important to prevent occurrence of an accident due to a collision between the arm or the like and an operator themselves or another member such as a tool which is being used by the operator and to avoid injury of an operator or damage to an object such as an arm at the time of contact therebetween.

Therefore, Japanese Patent No. 5805208 (Patent Document 1) proposes a safety device that can avoid a collision by controlling a motion of a gripper arm of an operation device based on results of detection from a first sensor device and a second sensor device. The safety device includes a first sensor device that has a detection range in which a distance from the operation device is small and a second sensor device that has a detection range in which a distance from the operation device is larger than that in the first sensor device, and prevents contact between the operation device and an operator or the like by decreasing a speed of the operation device in comparison with that in a normal case when the second sensor device has reacted and stopping the motion of the operation device when the first sensor device has reacted.

However, in the safety device described in Patent Literature 1, since the first sensor device and the second sensor device continue to perform detection even when the gripper arm of the operation device and an operator are located at positions at which both cannot collide with each other, there is concern that work efficiency will decrease due to occurrence of deceleration or stopping of the operation device based on erroneous detections by the first sensor device and the second sensor device. Particularly, since the first sensor device that is provided in the operation device is subjected to vibration or the like due to driving of the operation device, unnecessary stopping of the operation device due to erroneous detections is relatively likely to cause problems.

### Prior Art Documents

### Patent Documents

Patent Document 1: Japanese Patent No. 5805208

### SUMMARY OF THE INVENTION

### PROBLEMS TO BE SOLVED

The invention is made under the background of the above-mentioned descriptions, and issues thereof is to provide a safety device with a novel structure that can ensure safety by detecting approach or contact between an operator and a moving part of an automatic device and improve work efficiency of the automatic device by preventing erroneous detections.

### SOLUTIONS FOR SOLVING PROBLEMS

Hereinafter, aspects of the invention for solving the aforementioned issues will be described. Elements which are employed in the aspects described below can be employed in arbitrary combinations as far as possible.

That is, a first aspect of the invention provides a safety device that prevents danger due to a collision between a moving part provided in an automatic device and a movable detection object. The safety device includes a collision detecting member that is provided in the moving part of the automatic device and detects approach or contact of the detection object; a moving part controller that accelerates, decelerates or stops movements of the moving part based on a detection signal from the collision detecting member; a dangerous state detecting member that sets a dangerous area where the moving part and the detection object is likely to collide with each other and detects whether at least one of the moving part of the automatic device and the detection object is located in the dangerous area; and a collision detection controller that enables or disables a detection of approach or contact between the moving part and the detection object by the collision detecting member based on a detection signal from the dangerous state detecting member.

In the safety device having the structure according to the first aspect, avoidance of the collision between the moving part and the detection object, reduction of an impact force at the time of the collision, and the like are achieved by controlling acceleration, deceleration or stopping of movements of the moving part based on the results of detection of approach or contact between the moving part of the automatic device such as a robot and the detection object such as an operator by the collision detecting member. When the moving speed of the moving part has been decreased based on the detection signal from the collision detecting member having detected approach between the moving part and the detection object, the moving part controller that controls acceleration, deceleration or stopping of the moving part increases the moving speed of the moving part when the moving part and the detection object are located away from each other and approach is not detected, whereby it is possible to improve work efficiency.

Detections of the collision made by the collision detecting member is enabled in a state that at least one of the moving part and the detection object is located in the dangerous area in which there is a risk of collision, and the detections of the collision made by the collision detecting member is disabled in a state that both the moving part and the detection object are located outside the dangerous area and there is no risk of collision. Accordingly, unnecessary deceleration or stopping of the moving part due to erroneous detections by the collision detecting member is not likely to occur and it is thus possible to achieve improvement in work efficiency of the automatic device.

A second aspect of the invention provides the safety device according to the first aspect, wherein the dangerous state detecting member includes a moving part detecting member that detects entrance of the moving part into the dangerous area.

According to the second aspect, it is possible to ascertain whether the moving part of the automatic device has entered the dangerous area or is going to enter the dangerous area using the moving part detecting member, and the collision detecting member can be disabled because the collision between the moving part and the detection object cannot occur in a state that the moving part is located away from the dangerous area and there is no likelihood that the moving part will enter the dangerous area.

A third aspect of the invention provides the safety device according to the first or second aspect, wherein the dangerous state detecting member includes a detection object detecting member that detects entrance of the detection object into the dangerous area.

According to the third aspect, it is possible to ascertain whether the detection object such as an operator has entered the dangerous area or is going to enter the dangerous area using the detection object detecting member, and the collision detecting member can be disabled because a collision between the moving part and the detection object cannot occur in a state that the detection object is located away from the dangerous area and there is no likelihood that the detection object will enter the dangerous area.

A fourth aspect of the invention provides the safety device according to any one of the first to third aspects, wherein the dangerous area includes a common area which both the moving part of the automatic device and the detection object are able to enter, and the dangerous state detecting member detects entrance of both the moving part and the detection object into the common area.

According to the fourth aspect, the detections of the collision made by the collision detecting member can be enabled only in a state that there is high necessity by detecting a state that both the moving part and the detection object have entered the common area or are going to enter the common area using the dangerous state detecting member and switching the collision detecting member between enablement and disablement based on the detection signal from the dangerous state detecting member. Accordingly, it is possible to more effectively avoid unnecessary deceleration or stopping of the moving part due to erroneous detections made by the collision detecting member and to achieve improvement in work efficiency of the automatic device.

A fifth aspect of the invention provides the safety device according to the fourth aspect, wherein the common area includes a plurality of separate areas and the dangerous state detecting member detects entrance of the moving part and the detection object into one of the plurality of separate areas.

According to the fifth aspect, the common area is divided into a plurality of separate areas and the collision detecting member can be enabled only when the moving part and the detection object are located in one separate area or are going to enter one separate area. Accordingly, it is possible to enable the detections made by the collision detecting member only in a state that there is a high risk of collision and thus to more effectively prevent deceleration or stopping of the moving part due to erroneous detections of the collision detecting member.

A sixth aspect of the invention provides the safety device according to any one of the first to fifth aspects, wherein the collision detecting member includes a contact sensor that detects contact of the detection object with the moving part and the moving part controller stops the moving part based on a detection signal from the contact sensor when the contact sensor has detected the contact between the moving part and the detection object.

According to the sixth aspect, it is possible to reduce an impact force acting at the time of the collision between the moving part and the detection object by stopping the moving part when the contact of the detection object with the moving part has been detected. By detecting a pressure or the like acting at the time of contact using the contact sensor, it is possible to relatively reduce a frequency of erroneous detections.

A seventh aspect of the invention provides the safety device according to any one of the first to sixth aspects, wherein the collision detecting member includes an approach sensor that detects approach of the detection object to the moving part and the moving part controller decelerates movements of the moving part based on a detection signal from the approach sensor when the approach sensor has detected the approach between the moving part and the detection object.

According to the seventh aspect, by decreasing the moving speed of the moving part or stopping movement thereof in an approach state before the moving part and the detection object come into contact with each other, it is possible to more effectively reduce an impact force at the time of a collision between the moving part and the detection object and to prevent a collision between the moving part and the detection object.

An eighth aspect of the invention provides the safety device according to any one of the first to seventh aspects, further including a speed controller that adjusts a moving speed of the moving part based on the detection signal from the dangerous state detecting member.

According to the eighth aspect, for example, when the dangerous state detecting member has detected entrance of at least one of the moving part and the detection object into the dangerous area, it is possible to reduce an impact force at the time of a collision and to more effectively prevent the collision between the moving part and the detection object by decreasing the moving speed of the moving part using the speed controller.

### EFFECTS OF THE INVENTION

According to the invention, since control such as change of the moving speed or stopping of the moving part is performed based on the results of detection from the collision detecting member that detects the approach or the contact between the moving part and the detection object, it is possible to achieve improvement in safety by reducing an impact force at the time of the collision between the moving part and the detection object, avoiding a collision, or the like. The dangerous state detecting member that detects that at least one of the moving part and the detection object is located in the dangerous area in which there is a risk of collision is provided, and the detections of the collision made by the collision detecting member is switched between enablement and disablement based on the results of detection from the dangerous state detecting member. Accordingly, it is possible to ensure safety using the collision detecting member in a state in which there is a risk of collision between the moving part and the detection object and to prevent unnecessary stopping of the moving part due to erroneous detections made by the collision detecting member in a state that there is no risk of collision between the moving part and the detection object, whereby it is possible to achieve improvement in work efficiency of the automatic device.

### BRIEF DESCRIPTION OF DRAWINGS

FIG. 1 is a perspective view illustrating a robot collaboration device including a safety device according to the first embodiment of the invention.
FIG. 2 is a front view of the robot collaboration device illustrated in FIG. 1.
FIG. 3 is a top view of the robot collaboration device illustrated in FIG. 1.
FIG. 4 is an enlarged sectional view illustrating principal parts of an arm of a robot constituting the robot collaboration device illustrated in FIG. 1.
FIG. 5 is an exploded perspective view of a collision sensor which is provided in an arm illustrated in FIG. 4.
FIG. 6 is a flowchart illustrating operation of the safety device in the robot collaboration device illustrated in FIG. 1.
FIG. 7 is a front view illustrating a robot collaboration device including a safety device according to the second embodiment of the invention.
FIG. 8 is a top view of the robot collaboration device illustrated in FIG. 7.
FIG. 9 is a front view illustrating a robot collaboration device including a safety device according to the third embodiment of the invention.
FIG. 10 is a top view of the robot collaboration device illustrated in FIG. 9.

### DESCRIPTION OF EMBODIMENTS

Hereinafter, embodiments of the disclosure will be described with reference to the accompanying drawings.

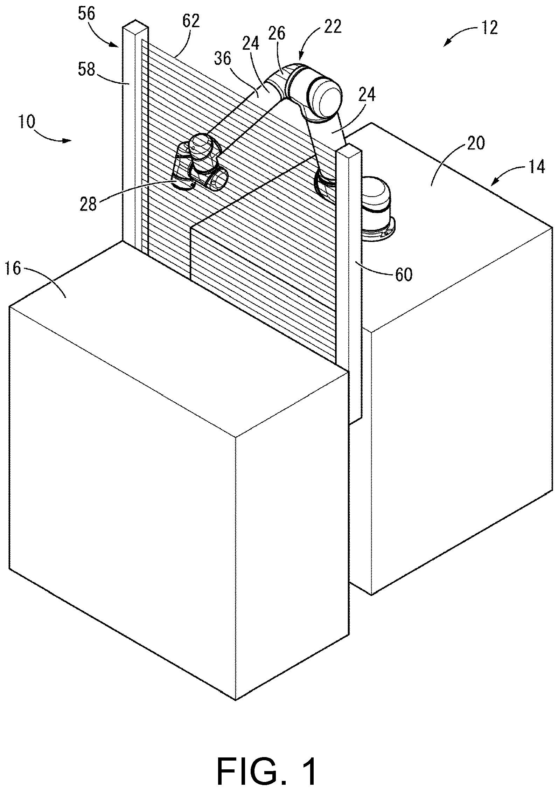

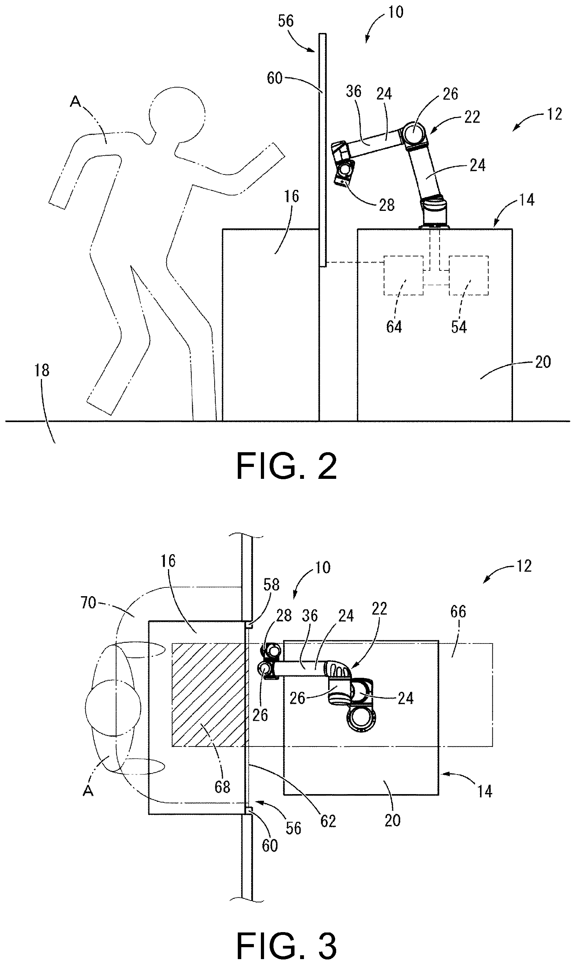

FIGs. 1 to 3 illustrate a robot collaboration device 12 including a safety device 10 according to the first embodiment of the invention. The robot collaboration device 12 includes a robot 14 serving as an automatic device and a common work table 16. In the following description, a vertical direction is defined as an up-down direction in FIG. 2 in principle.

The robot 14 has a structure in which an arm 22 serving as a moving part is provided on a support table 20 provided on a floor 18. The arm 22 has an articulated structure in which a plurality of links 24 are connected by joints 26 in a relatively displaceable manner, and an end effector 28 is provided at a tip of the arm 22. A base end of the arm 22 is rotatably attached to the top surface of the support table 20.

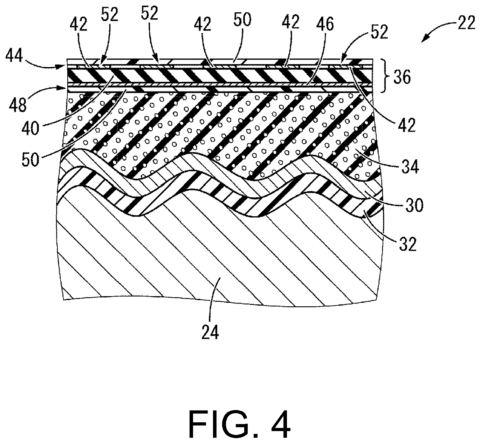

A shield layer 30 is provided on outer surfaces of the links 24, the joints 26, and the end effector 28 of the arm 22. The shield layer 30 is provided to block electromagnetic waves etc., emitted outward from the arm 22 as illustrated in FIG. 4 and is formed to contain a conductive metal such as iron, copper, or aluminum alloy. The shield layer 30 is disposed to cover the outer surfaces of the links 24 by attaching a support body 32, which will be described later, to the surfaces of the links 24. In FIG. 4, one link 24 of the arm 22 is illustrated as an example, but the shield layer 30, an elastic cushion layer 34 which will be described later, a collision sensor 36 which will be described later, and the like may be also provided on the joints 26 and the end effector 28 in the same way as in the links 24.

For example, the shield layer 30 in this embodiment is formed on the surface of the support body 32 using a method such as silk screen printing by a paint in which metal powder is dispersed in a base material of a rubber, a synthetic resin, or the like, where the support body 32 is a flexible resin film formed of polyethylene terephthalate (PET) or the like. Furthermore, the shield layer 30 may be formed of a thin board or mesh of metal or can be obtained by spraying a paint in which metal powder is dispersed in a base material directly onto the surface of the link 24 to form a coating. The thickness of the support body 32 is not particularly limited as long as the support body 32 is flexibly deformable.

An elastic cushion layer 34 is provided outside the shield layer 30. The elastic cushion layer 34 is formed of a rubber, a resin elastomer, or the like and may be formed of a foam of open cells or closed cells or a foam in which open cells and closed cells are mixed. The material of the elastic cushion layer 34 is not particularly limited and, for example, a semi-hard foamed urethane can be suitably employed. Furthermore, the elastic cushion layer 34 may be formed of a non-foamed rubber or resin elastomer.

In the elastic cushion layer 34 in this embodiment, the inner surface on the link 24 side has a shape corresponding to the outer surface of the uneven link 24 and the outer surface on the side opposite to the link 24 is flat. In this embodiment, the shield layer 30 and the support body 32 are disposed between the elastic cushion layer 34 and the link 24, but since both the shield layer 30 and the support body 32 are flexible and sufficiently thin and are disposed along the outer surface of the link 24, the elastic cushion layer 34 is superimposed substantially directly on the outer surface of the link 24. Unevenness of the outer surface of the link 24 is schematically illustrated in FIG. 4, but the unevenness of the outer surface of the link 24 can be formed, for example, by arrangement of a control circuit or wires of the arm 22, design of a link housing, a screw clamping structure, or the like.

A collision sensor 36 that constitutes a collision detecting member of the safety device 10 is superimposed on the outside of the elastic cushion layer 34 in the arm 22. The collision sensor 36 in this embodiment is a contact sensor that detects contact of an operator A with the arm 22 and a planar pressure sensor of capacitance type is employed in this embodiment. As the collision sensor 36, contact sensors of various known systems can be employed and, for example, any one of an impact sensor using a piezoelectric ceramic, a touch sensor of resistive film type, infrared type, a surface acoustic wave type or the like, a flow rate sensor that detects an air flow due to deformation of an elastic layer at the time of contact and a membrane switch can be employed. Furthermore, a sensor built in the robot 14 can also be used as the collision sensor 36 and for example, when a force sensor, a torque sensor, or an encoder sensor is built in the robot 14, these sensors can also be used as the collision sensor 36. In addition, the collision sensor 36 may be provided to cover substantially the entire surface of the arm 22, but may be provided, for example, to cover only a tip part which can enter a dangerous area 70 which will be described later.

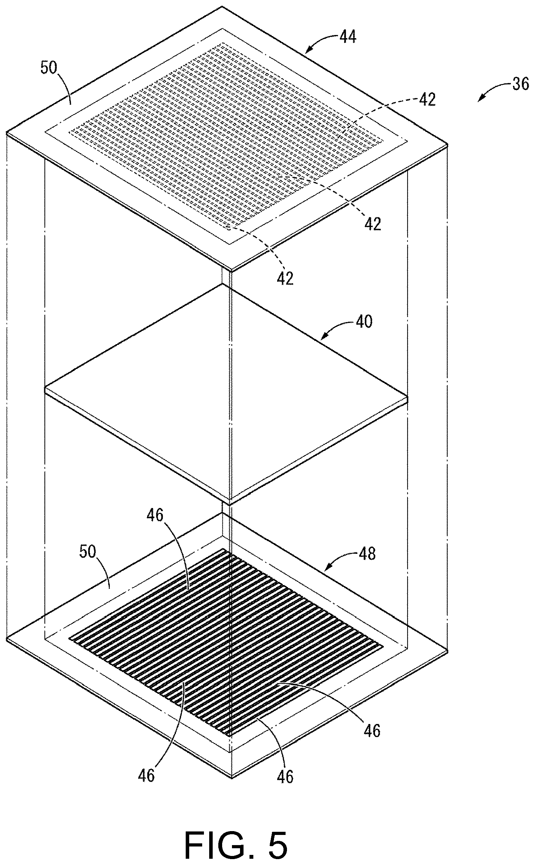

As illustrated in FIG. 5, the collision sensor 36 in this embodiment has a structure in which a first electrode sheet 44 including a plurality of first electrodes 42 in parallel and a second electrode sheet 48 including a plurality of second electrodes 46 in parallel are respectively superimposed on and secured to both surfaces of a dielectric layer 40.

The dielectric layer 40 is a deformable electric insulator having a sheet shape that is formed of rubber or resin elastomer and may be formed of non-foamed rubber whose volume changes hardly. The dielectric layer 40 can be integrally formed with the first electrode sheet 44 and the second electrode sheet 48 which will be described later.

The first electrode sheet 44 has a structure in which a plurality of band-shaped first electrodes 42 having electrical conductivity is formed in parallel on a substrate 50 that is in a sheet shape with electric insulation. The first electrodes 42 are formed by mixing conductive material such as carbon filler or metallic powder, etc. into elastic material such as rubber and are flexibly deformable. The first electrodes 42 can be formed on the substrate 50 by screen printing or the like.

Similarly to the first electrode sheet 44, the second electrode sheet 48 has a structure in which a plurality of flexible band-shaped second electrodes 46 having electrical conductivity are formed in parallel on the substrate 50 that is in a sheet shape with electric insulation. The material, the formation method on the substrate 50, and the like of the second electrodes 46 are the same as the first electrodes 42.

The collision sensor 36 is formed by superimposing and securing the first electrode sheet 44 and the second electrode sheet 48 respectively on both sides of the dielectric layer 40 in the thickness direction by such as bonding or welding. In a state in which the dielectric layer 40 and the first and second electrode sheets 44 and 48 are superimposed, the length direction of the first electrodes 42 and the longitudinal direction of the second electrodes 46 are different from each other, and the first electrodes 42 and the second electrodes 46 intersect and face each other through the dielectric layer 40. Accordingly, pressure detecting portions 52 that detects a pressure acting in the facing direction based on a change in capacitance are respectively formed at each intersecting and facing portion between the first electrodes 42 and the second electrodes 46 (see FIG. 4). Accordingly, the collision sensor 36 having a structure in which a plurality of pressure detecting portions 52 are dispersed and arranged are planar pressure sensors of capacitance type that detect a pressure acting on a surface based on a change in capacitance. The collision sensor 36 having a rectangular sheet shape is illustrated in FIG. 5, but the specific shape of the collision sensor 36 can be appropriately set depending on the shape of the arm 22 or the like.

The capacitance of each pressure detecting portion 52 is detected by causing a predetermined detection current to flow in the plurality of first electrodes 42 and the plurality of second electrodes 46 in a scan manner. In addition, the first electrodes 42 and the second electrodes 46 are not limited to a band shape and, for example, may be formed in a plurality of spot shapes which are independent and be arranged to face each other.

An arm controller 54 serving as a moving part controller is connected to the collision sensor 36. The arm controller 54 serves to perform deceleration or emergency stopping of the arm 22 based on a collision detection signal from the collision sensor 36, and is built in the support table 20 of the robot 14 in this embodiment as illustrated in FIG. 2. The arm controller 54 may be connected to the collision sensor 36 in a wired or a wireless manner.

The common work table 16 is disposed in the vicinity of the support table 20 that supports the robot 14. The common work table 16 is a work table which is used by both the robot 14 and an operator A who will be described later and is separated from the support table 20 in this embodiment, but a part of the support table 20 may be formed to serve as the common work table 16.

A light curtain 56 that constitutes a dangerous state detecting member of the safety device 10 is provided at an end of the common work table 16 at the support table 20 side. The light curtain 56 which is a moving part detecting member can detect entrance of the arm 22 into a space between a light projecting portion 58 and a light receiving portion 60 by detecting that light beams 62 projected from the light projecting portion 58 to the light receiving portion 60 are blocked. By providing the light projecting portion 58 and the light receiving portion 60 at both corners on the support table 20 side in the common work table 16, entrance of the arm 22 to the common work table 16, that is, entrance of the arm 22 to a dangerous area 70 which will be described later, is detected by the light curtain 56. A plurality of light beams 62 extending in a substantially horizontal direction at predetermined intervals in a vertical direction are projected from the light projecting portion 58 to the light receiving portion 60, and entrance of the arm 22 can be detected even when the arm 22 moves to the common work table 16 at any height.

A sensor controller 64 which is a collision detection controller is connected to the light curtain 56. The sensor controller 64 serves to switch between start and stopping of detections made by the collision sensor 36 based on a detection signal from the light curtain 56, and generates a sensor control signal for enabling or disabling the collision sensor 36 based on the detection signal from the light curtain 56 and transmits the generated sensor control signal to the collision sensor 36. More specifically, the sensor controller 64 enables the collision sensor 36 based on the detection signal from the light curtain 56 indicating that the arm 22 has been detected and disables the collision sensor 36 based on the fact that the detection signal indicating that the arm 22 has been detected has not been received from the light curtain 56.

The sensor controller 64 is connected to the light curtain 56 or the collision sensor 36 in a wired or wireless manner. In this embodiment, the sensor controller 64 is built in the support table 20 of the robot 14, is connected to the light curtain 56 in a wireless manner, and is connected to the collision sensor 36 in a wired manner.

In the robot collaboration device 12 having the above-mentioned configuration, the arm 22 is disposed on the support table 20 and an operator A is located on the side (the left side in FIG. 3) opposite to the support table 20 with the common work table 16 interposed therebetween. The arm 22 of the robot 14 in this embodiment is movable in an arm entrance area 66 which is indicated by a dot dash line in FIG. 3, and a part of the arm entrance area 66 extends on the common work table 16. The arm entrance area 66 in this embodiment is set based on the a moving range of the arm 22 which is programmed in advance, but safety against an unintentional motion due to an erroneous operations of the arm 22 or the like can be achieved, for example, by setting the arm entrance area 66 based on a maximum movable range of the arm 22.

On the other hand, since an operator A can cause at least a part of a body such as an arm to enter the entire space over the common work table 16, the part of the arm entrance area 66 extending over the common work table 16 is a common area 68 which both the arm 22 and the operator A can enter. The common area 68 is an area in which the arm 22 and the operator A can collide with each other, and a collision between the arm 22 and the operator A occurs only in a state that both the arm 22 and the operator A are located in the common area 68. In FIG. 3, the common area 68 is hatched.

A range in which the operator A can cause a part of the body to enter the common area 68 by stretching a hand or the like is illustrated as a dangerous area 70 in this embodiment by an alternate long and short dash line in FIG. 3. In a state that the operator A is located in the dangerous area 70, at least a part of the body of the operator A can enter the common area 68 due to a change in posture of the operator A or the like, and thus the arm 22 and the operator A can collide with each other in the common area 68. In other words, when the operator A is located outside the dangerous area 70, the operator A does not collide with the arm 22 in the common area 68.

Safety against a collision between the arm 22 of the robot 14 and the operator A in the common area 68 is ensured by the safety device 10 that controls movement of the arm 22 based on the results of detection from the collision sensor 36 serving as a collision detecting member and the light curtain 56 serving as a moving part detecting member.

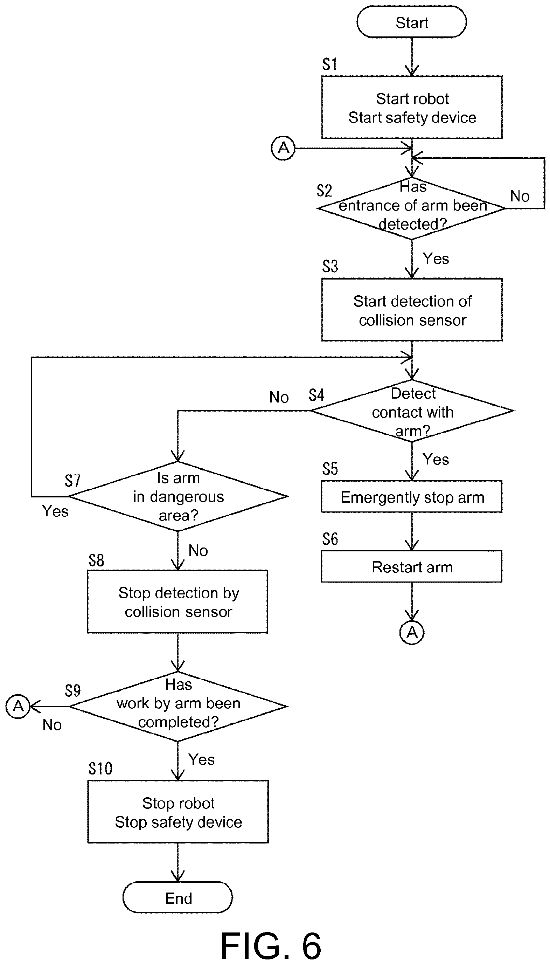

That is, as illustrated in the flowchart of FIG. 6, first, in Step (hereinafter referred to as S) 1, the robot 14 is started to start work using the arm 22 of the robot 14 and the safety device 10 that prevents danger due to a collision between the arm 22 and the operator A is started.

Then, in S2, it is determined whether the arm 22 of the robot 14 has entered the dangerous area 70 including the common area 68 based on a detection signal from the light curtain 56. When it is determined in S2 that the arm 22 has entered the dangerous area 70 (S2=Y), a sensor control signal is transmitted from the sensor controller 64 to the collision sensor 36 in S3 to start detection of contact by the collision sensor 36. When it is determined in S2 that the arm 22 has entered the dangerous area 70 (S2=Y), for example, the arm controller 54 may decelerate the arm 22 based on a detection signal from the light curtain 56 to prepare for a collision between the arm 22 and the operator A. In this case, the arm controller 54 serving as a moving part controller also serves as a speed controller.

On the other hand, when it is determined in S2 that entrance of the arm 22 into the dangerous area 70 has not been detected (S2=N), the determination of S2 is performed again. A predetermined waiting time may be provided before the determination of S2 is performed again, and the determination of S2 may be performed at intervals of the predetermined time.

Then, in S4, whether contact with the arm 22 has been made is determined based on the detection signal from the collision sensor 36 having started detection in S3. When the contact with the arm 22 has been made is determined in S4 (S4=Y), the arm controller 54 stops the movements of the arm 22 in emergency to reduce an impact force during collision in S5. After the contact between the arm 22 and the operator A has been released, the robot 14 is restarted to restart work made by the arm 22 in S6. Restart of the robot 14 in S6 may be automatically performed based on the result of detection from the collision sensor 36, but in order to improve safety further, it may require a person's manual operation such as operating a restart switch.

On the other hand, when it is determined in S4 that contact with the arm 22 has not been made (S4=N), it is determined in S7 whether the arm 22 of the robot 14 is located in the dangerous area 70 based on the detection signal from the light curtain 56. When it is determined in S7 that the arm 22 is located in the dangerous area 70 (S7=Y), it is determined again in S4 whether contact has been made using the collision sensor 36. When it is determined in S7 that the arm 22 has moved to a position which is located away from the dangerous area 70 (S7=N), the sensor controller 64 stops the detection of contact made by the collision sensor 36 in S8.

Then, in S9, it is determined whether a work process of the arm 22 has been completed. When it is determined that the work process of the arm 22 has been completed (S9=Y), the arm 22 and the safety device 10 are stopped in S 10 and the detection of collision made by the safety device 10 ends. On the other hand, when it is determined that the work process of the arm 22 has not been completed (S9=N), the processes of S2 and the steps subsequent thereto are performed again. As can be seen from S2 and S9, the arm 22 in this embodiment is located in an area which is located away from the dangerous area 70 in the arm entrance area 66 at the time of start and end of work. However, the arm 22 may be located in the dangerous area 70 at the time of start and end of work.

As can be understood from the flowchart of FIG. 6, since a collision between the arm 22 and the operator A can occur in a state that the arm 22 of the robot 14 is located in the dangerous area 70, the sensor controller 64 enables the detection of contact with the arm 22 made by the collision sensor 36. Accordingly, when the contact between the arm 22 and the operator A is detected by the collision sensor 36, the arm controller 54 controls the movements of the arm 22 based on the detection signal from the collision sensor 36 such that an impact force at the time of collision is reduced, whereby improvement in safety against a collision is achieved.

On the other hand, since the collision between the arm 22 and the operator A cannot occur in a state that the arm 22 of the robot 14 is located away from the dangerous area 70, the sensor controller 64 disables the detection of contact with the arm 22 made by the collision sensor 36. Accordingly, it is possible to prevent unnecessary stop or the like of the robot 14 due to erroneous detection by the collision sensor 36 and thus to achieve improvement in work efficiency of the robot 14.

When the arm 22 is stopped based on only the fact that both the arm 22 of the robot 14 and the operator A are located in the dangerous area 70, there is concern that the work efficiency of the robot 14 will decrease significantly, but in this embodiment the arm 22 is not stopped even when both the arm 22 and the operator A are located in the dangerous area 70, and the arm 22 is stopped due to the contact between the arm 22 and the operator A. In this way, by starting the detection of contact made by the collision sensor 36 in order to prepare for a risk of collision based on the detection signal from the light curtain 56 having detected entrance of the arm 22 into the dangerous area 70 and then stopping the arm 22 based on the detection signal from the collision sensor 36 having detected the contact between the arm 22 and the operator A, it is possible to decrease the frequency of stop of the arm 22 and thus to achieve improvement in work efficiency of the arm 22.

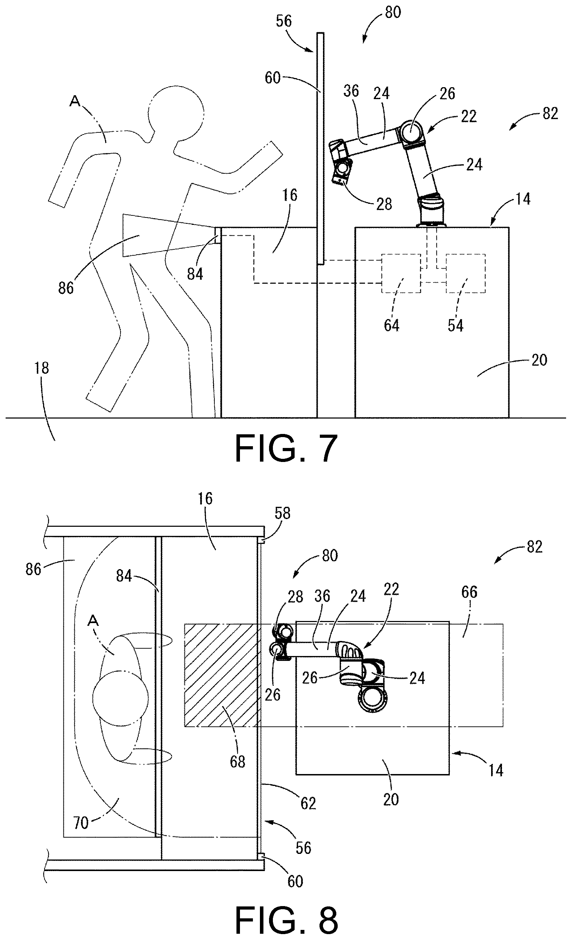

FIGs. 7 and 8 illustrate a robot collaboration device 82 including a safety device 80 according to the second embodiment of the invention. In the following description, members and parts substantially the same as those in the first embodiment will be referred to by the same reference signs in the drawings and descriptions thereof will be omitted.

That is, the safety device 80 according to this embodiment includes an area sensor 84 serving as a detection object detecting member to detect that the operator A is located in the vicinity of the common work table 16 in addition to the light curtain 56 that detects the arm 22 of the robot 14 entering the dangerous area 70 and the collision sensor 36 that detects the contact between the arm 22 and the operator A.

The area sensor 84 is provided on a side surface of the common work table 16 at the operator A side (the left side in FIG. 7), projects beams with a predetermined coverage to the operator A side, and can detect that the operator A is located in the vicinity of the common work table 16 when the operator A blocks the beams.

For example, when the operator A is located in the dangerous area 70 where the operator A can reach the common area 68 set on the common work table 16 by stretching an arm or the like, a detection range 86 of the area sensor 84 is set to be able to detect presence of the operator A. In other words, the detection range 86 of the area sensor 84 may be set such that the operator A cannot enter the common area 68 and the collision between the operator A and the arm 22 of the robot 14 cannot occur in a state that the operator A is located outside the detection range 86 of the area sensor 84. The detection range 86 of the area sensor 84 may be set to cover the dangerous area 70 extending to the edge side of the common work table 16, but does not need to match the dangerous area 70 and can be set to a range wider than the dangerous area 70.

However, the detection object detecting member is not limited to the optical area sensor 84 illustrated in the drawing, and, for example, an ultrasonic area sensor using ultrasonic waves instead of light beams, a sensor that identifies a position of an operator A by processing an image captured by a camera, or a matt sensor that is installed in the floor 18 and identifies a position of the operator A based on a weight applied thereto can be employed.

In the safety device 80 of the robot collaboration device 82 according to this embodiment, the sensor controller 64 switches the detection made by the collision sensor 36 between enablement and disablement based on a detection signal indicating that the light curtain 56 has detected entrance of the arm 22 into the common area 68 and a detection signal indicating that the area sensor 84 has detected approach of the operator A to the common work table 16.

That is, when the arm 22 of the robot 14 is located in the common area 68 and the operator A is located in the dangerous area 70 in which the operator A can reach the common area 68, the arm 22 and the operator A can collide with each other in the common area 68 and thus the sensor controller 64 enables the detection made by the collision sensor 36 to reduce or avoid danger due to a collision.

On the other hand, when it has been detected that the operator A is located outside the detection range 86 of the area sensor 84 even though the arm 22 being located in the common area 68 is detected by the light curtain 56, the operator A does not enter the common area 68 and the collision between the arm 22 and the operator A in the common area 68 does not occur. Therefore, in this case, the sensor controller 64 disables the detection made by the collision sensor 36 to avoid unnecessary stop of the arm 22 due to erroneous detections made by the collision sensor 36.

Similarly, even when the operator A is located in the detection range 86 of the area sensor 84 and the arm 22 is located outside the common area 68, the collision between the arm 22 and the operator A does not occur and thus the sensor controller 64 disables the detection made by the collision sensor 36.

In this way, according to this embodiment, since the detection made by the collision sensor 36 is switched between enablement and disablement with reference to whether the operator A is located in the dangerous area 70 as well as whether the arm 22 of the robot 14 is located in the common area 68, the collision sensor 36 can be disabled only when there is a high risk of collision. Accordingly, stop of the arm 22 due to erroneous detections made by the collision sensor 36 is advantageously avoided and improvement in work efficiency of the robot 14 is effectively realized.

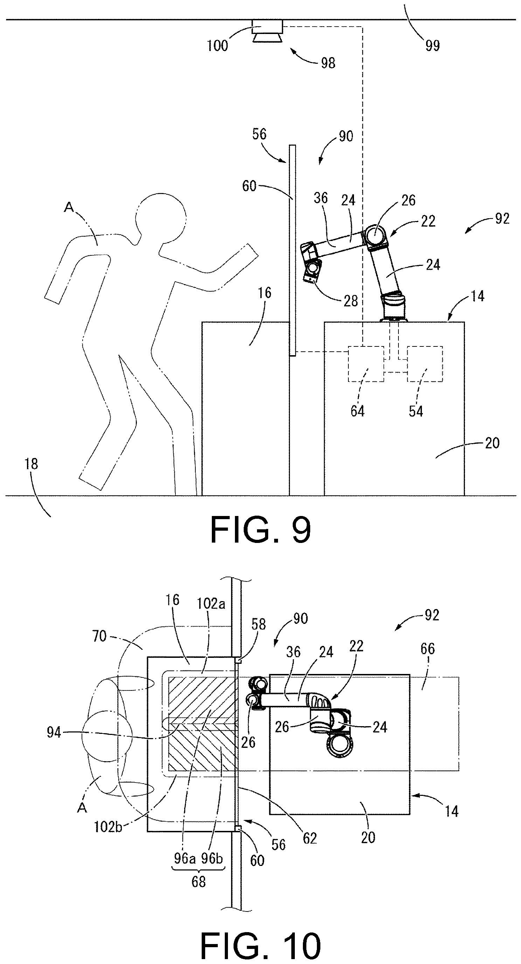

FIGs. 9 and 10 illustrate a robot collaboration device 92 including a safety device 90 according to the third embodiment of the invention.

In this embodiment, the common area 68 which both the arm 22 of the robot 14 and the operator A can enter is constituted by a first separate area 96a and a second separate area 96b which are disposed on both sides of a boundary 94 indicated by a dot dash line in FIG. 10.

As illustrated in FIG. 9, the safety device 90 includes an imaging detector 98 serving as a separate area detecting member. The imaging detector 98 is to detect in which of the first separate area 96a and the second separate area 96b the arm 22 and the operator A are located, for example, based on images captured by a camera 100 attached to a ceiling 99 from above (the upper side in FIG. 9). The imaging detector 98 is to detect whether both the arm 22 and the operator A are located in the common area 68 and whether the arm 22 and the operator A are located in the same separate area 96, and to transmit detection signals to the sensor controller 64.

When the arm 22 and the operator A are located in the same separate area 96, there is a concern of collision between the arm 22 and the operator A and thus the sensor controller 64 enables the detection of contact made by the collision sensor 36 based on the detection signal from the imaging detector 98. Accordingly, when the arm 22 and the operator A collide with each other, the arm 22 is emergently stopped based on the result of detection from the collision sensor 36 to reduce an impact force at the time of collision.

On the other hand, when the arm 22 and the operator A are located in different separate areas 96, there is no concern of collision between the arm 22 and the operator A and thus the sensor controller 64 disables the detection of contact made by the collision sensor 36 based on the detection signal from the imaging detector 98. Accordingly, unnecessary stop of the arm 22 due to erroneous detections made by the collision sensor 36 is avoided and improvement in work efficiency of the robot 14 is achieved.

Particularly, in this embodiment, when both the arm 22 and the operator A are located in the common area 68 and the arm 22 and the operator A are located in the first separate area 96a and the second separate area 96b respectively, there occurs no collision between the arm 22 and the operator A and thus the collision sensor 36 is disabled. Therefore, it is possible to more efficiently avoid deceleration or stop of the arm 22 due to erroneous detections made by the collision sensor 36 and thus to advantageously achieve improvement in work efficiency.

In the third embodiment, an aspect that the common area 68 is divided into two separate areas 96a and 96b is described, but the common area 68 may be divided into three or more separate areas and the collision sensor 36 may be enabled only when the arm 22 and the operator A are located in the same separate area.

In the third embodiment, an example that the common area 68 is divided into two separate areas 96a and 96b in a planar way is described above, but the common area 68 may be divided in a height direction (the up-down direction in FIG. 9) and it may be detected whether the arm 22 and the operator A are located in the same separate area in the height direction. In combination of planar division of the common area 68 described in the third embodiment and division of the common area 68 in the height direction, a plurality of separate areas can be arranged in a three-dimensional manner.

Without dividing the common area 68 into a plurality of separate areas, whether both the arm 22 and the operator A are located in the common area 68 may be detected by the imaging detector 98. According to this configuration, when it is detected that both the arm 22 and the operator A are located in the common area 68, it is possible to realize both securement of sufficient safety and excellent work efficiency, and to achieve simplification of image processing in the imaging detector 98 by determining that there is a risk of collision and enabling the collision sensor 36.

In the third embodiment, which separate areas 96 the arm 22 and the operator A enter can be detected by the imaging detector 98 serving as the separate area detecting member, but the separate area detecting member is not limited to use of images captured by the camera 100 such as the imaging detector 98.

Specifically, for example, an angle sensor that detects an angle of the joints 26 of the arm 22 or the like can be employed as the separate area detecting member that detects in which separate area 96 the arm 22 is located and a matt sensor that is installed in the floor 18 or the like can be employed as the separate area detecting member that detects in which separate area 96 the operator A is located. In this case, since the position of the operator A on the floor 18 can be detected based on a weight acting on the matt sensor but the posture of the operator A (for example, which direction the operator A stretches an arm in) cannot be detected, whether detection made by the collision sensor 36 is necessary or unnecessary is determined, for example, by setting an entire range which it is estimated that a hand or the like of the operator A can reach as the position of the operator A based on the detected position of the operator A. Accordingly, when the operator A has been detected by the matt sensor at a position at which the operator A can reach both the first and second separate areas 96a and 96b, the detection made by the collision sensor 36 is enabled by detecting entrance of the arm 22 into any of the first and second separate areas 96a and 96b.

As indicated by the dot dash line in FIG. 10, first and second entrance prediction areas 102a and 102b may be set around the first and second separate areas 96a and 96b and it may be determined that the arm 22 and the operator A are going to enter the same separate area 96 to enable the collision sensor 36 when the imaging detector 98 has detected that both the arm 22 and the operator A enter one of the first and second entrance prediction areas 102a and 102b. In brief, the third embodiment is not limited to a configuration in which a state that both the arm 22 and the operator A have entered one separate area 96 is detected substantially at the same time as entrance, but may employ a configuration in which it is detected that both the arm 22 and the operator A are going to enter one separate area 96 before entrance.

In a case that the first and second entrance prediction areas 102a and 102b are provided, the sensor controller 64 enables the collision sensor 36 based on the detection signal from the imaging detector 98 when the imaging detector 98 detects that the arm 22 and the operator A have entered one of the first and second entrance prediction areas 102a and 102b and entrance of the arm 22 and the operator A into the same separate area 96 is predicted from the result of detection from the imaging detector 98. On the other hand, when the imaging detector 98 detects that the arm 22 and the operator A have entered the first and second entrance prediction areas 102a and 102b, respectively, or that at least one of the arm 22 and the operator A does not enter any of the first and second entrance prediction areas 102a and 102b and entrance of the arm 22 and the operator A into the same separate area 96 is not predicted from the result of detection from the imaging detector 98, the sensor controller 64 disables the collision sensor 36 based on the detection signal from the imaging detector 98.

In the aspect that the first and second entrance prediction areas 102a and 102b are provided, by predicting that the arm 22 and the operator A enter one separate area 96 and enabling the collision sensor 36, it is possible to secure safety against a collision, for example, even when the arm 22 and the operator A collide with each other substantially at the same time as entrance into one separate area 96.

The aspect that entrance of the arm 22 and the operator A into a specific area is detected before the entrance and the collision sensor 36 is enabled before the entrance is not applied to only the separate areas 96 in the third embodiment, but detection before entrance into an area is possible even when entrance of another area is detected. For example, when entrance of the arm 22 and the operator A into the common area 68 which is not divided by the boundary 94 is detected, entrance of the arm 22 and the operator A into the common area 68 can be detected before the entrance by setting an entrance prediction area 102 around the common area 68. For example, in the first embodiment, by providing the light curtain 56 at a position which is located away from the dangerous area 70 to the robot 14 side, entrance of the arm 22 into the dangerous area 70 can be detected before the entrance by the light curtain 56.

While embodiments of the invention have been described above in detail, the invention is not limited to the detailed description thereof. For example, instead of or in addition to the contact sensor, an approach sensor that can detect approach of the operator A before contact with the arm 22 can be employed as the collision sensor 36 constituting the collision detecting member. The approach sensor can be realized, for example, by adjusting detection accuracy of the capacitance type sensor, or the electric resistance type sensor described in the first embodiment or a sensor having a structure other than the contact sensor such as an infrared sensor may be employed.

In this way, when an approach sensor is employed as the collision sensor 36, the arm controller 54 adjusts a moving speed of the arm 22 according to on the result of determination of approach between the arm 22 and the operator A based on the detection signal from the approach sensor. Accordingly, deceleration or stopping of the arm 22 in preparation for a collision is possible before contact between the arm 22 and the operator A, an impact force at the time of collision between the arm 22 and the operator A can be reduced, and it is also possible to prevent a collision. When the arm 22 and the operator A are located away from each other after the arm 22 has been decelerated based on the detection signal from the approach sensor having detected approach between the arm 22 and the operator A and detection of approach between the arm 22 and the operator A by the approach sensor is released, the arm controller 54 may accelerate the arm 22 to a moving speed before deceleration thereof based on the fact that there is no detection signal from the approach sensor.

In the above-mentioned embodiments, the collision sensor 36 that includes a plurality of pressure detecting portions 52 and can measure a surface pressure distribution is described above but, for example, when it is not necessary to ascertain a direction of contact or the like, a contact sensor including only one pressure detecting portion 52 covering the entire surface of the link 24 can be employed.

In the above-mentioned embodiments, the light curtain 56 is described above as the moving part detecting member, but entrance of the arm 22 into the common area 68 can be detected, for example, based on images captured by a camera, angles of the joints 26 of the arm 22 that are detected by the angle sensor, and a distance between the arm 22 and the common work table 16 that is detected by a distance sensor.

The arm entrance area 66, the common area 68, the dangerous area 70, and the like described in the above-mentioned embodiments are only examples and can be appropriately set depending on work details, a work space, or the like. For example, the common area 68 is not limited to the aspect in which it is set on the common work table 16.

In the above-mentioned embodiments, an operator A is described as a detection object which is detected by the collision detecting member, but the detection object is not limited to a person and may be an object. In order to reduce a force acting at the time of contact of the detection object with the moving part, it may be that a buffer member such as the elastic cushion layer 34 be provided in the moving part, but the elastic cushion layer 34 is not essential.

The automatic device that the collision detecting member is mounted is not limited to an industrial robot described in the above-mentioned embodiments and but may be, for example, a medical or nursing robot or an automatic guided vehicle (AGV). In the above-mentioned embodiments, a structure that the arm 22 which is a part of the automatic device serves as the moving part is described above but, for example, when the automatic device is an AGV, the entire automatic device serves as the moving part.

### [Reference Signs List]

10, 80, 90: Safety device
14: Robot (automatic device)
22: Arm (moving part)
36: Collision sensor (collision detecting member, contact sensor, approach sensor)
54: Arm controller (moving part controller, speed controller)
56: Light curtain (dangerous state detecting member, moving part detecting member)
64: Sensor controller (collision detection controller)
68: Common area
70: Dangerous area
84: Area sensor (detection object detecting member)
96a: First separate area
96b: Second separate area

## Claims

1. A safety device that prevents danger due to a collision between a moving part provided in an automatic device and a detection object that is movable, the safety device comprising:
a collision detecting member that is provided in the moving part of the automatic device and detects approach or contact of the detection object;
a moving part controller that accelerates, decelerates or stops movements of the moving part based on a detection signal from the collision detecting member;
a dangerous state detecting member that sets a dangerous area where the moving part and the detection object is likely to collide with each other and detects whether at least one of the moving part of the automatic device and the detection object is located in the dangerous area; and
a collision detection controller that enables or disables a detection of approach or contact between the moving part and the detection object by the collision detecting member based on a detection signal from the dangerous state detecting member.

2. The safety device according to claim 1, wherein the dangerous state detecting member comprises a moving part detecting member that detects entrance of the moving part into the dangerous area.

3. The safety device according to claim 1 or 2, wherein the dangerous state detecting member comprises a detection object detecting member that detects entrance of the detection object into the dangerous area.

4. The safety device according to any one of claims 1 to 3, wherein the dangerous area comprises a common area which both the moving part of the automatic device and the detection object are able to enter, and the dangerous state detecting member detects entrance of both the moving part and the detection object into the common area.

5. The safety device according to claim 4, wherein the common area comprises a plurality of separate areas and the dangerous state detecting member detects entrance of the moving part and the detection object into one of the plurality of separate areas.

6. The safety device according to any one of claims 1 to 5, wherein the collision detecting member comprises a contact sensor that detects contact of the detection object with the moving part and the moving part controller stops the moving part based on a detection signal from the contact sensor when the contact sensor has detected the contact between the moving part and the detection object.

7. The safety device according to any one of claims 1 to 6, wherein the collision detecting member comprises an approach sensor that detects approach of the detection object to the moving part and the moving part controller decelerates movements of the moving part based on the a detection signal from the approach sensor when the approach sensor has detected the approach between the moving part and the detection object.

8. The safety device according to any one of claims 1 to 7, further comprising a speed controller that adjusts a moving speed of the moving part based on the detection signal from the dangerous state detecting member.
